# NEW EUROPEAN PATENT SPECIFICATION

(11) **EP 0 107 461 B2**
(45) Date of publication and mention of the opposition decision: **09.08.1995**
(45) Mention of the grant of the patent: 06.05.1987
(21) Application number: 83306252.4
(22) Date of filing: 14.10.1983
(51) Int. Cl.: G11B 7/00

(54) **Optical signal reading device**
Lesegerät für optische Signale
Appareil de lecture pour signal optique

(30) Priority: 14.10.1982 JP 181854/82
(43) Date of publication of application: 02.05.1984
(73) Proprietor: MITSUBISHI DENKI KABUSHIKI KAISHA, Tokyo 100 (JP)
(72) Inventor: Kime, Kenjiro c/o Mitsubishi Denki K.K., 1 Babazusho Nagaokakyo-shi Kyoto-fu (JP); Okada, Kazuo c/o Mitsubishi Denki K.K., 1 Babazusho Nagaokakyo-shi Kyoto-fu (JP); Kondou, Mitsushige c/o Mitsubishi Denki K.K., 1 Babazusho Nagaokakyo-shi Kyoto-fu (JP)
(74) Representative: Wright, Peter David John

(56) References cited:
- DE-A- 2 403 013
- DE-A- 2 652 790
- DE-A- 2 914 122
- DE-A- 3 132 818
- DE-A- 3 221 229
- FR-A- 2 504 300
- NL-A- 8 101 932
- US-A- 3 876 841
- US-A- 4 023 033

## Description

This invention relates to an optical signal reading device for an optical information recording and reproducing apparatus having at least either the function of reading information recorded on the track of a disc-like record carrier or the function of optically recording information on the recording medium, and more particularly it relates to an optical signal reading device having a beam splitter of improved construction.

Conventional devices of this type include a video disc device and a digital audio disc device. Conventional devices of this type generally comprise a light source, an objective for focusing the light emitted from the light source on the disc surface as a spot of light, and a light detector for detecting the reflected light from the disc surface led in through said objective. A beam splitter is disposed between the objective, light source, and light detector. Examples of such arrangements are disclosed in U.S. Patent No. 4,261,646 and U.K. Patent Specicication No. 1,532,345.

In these prior art arrangements, the light beam from the light source falling on the beam splitter is approximately at right angles to the reflected light from the disc surface guided to the light detector through the beam splitter. However, as fully described below, with such arrangement there are problems that installation of the light detector and beam splitter requires high precision and that complex adjustments of these optical parts are required.

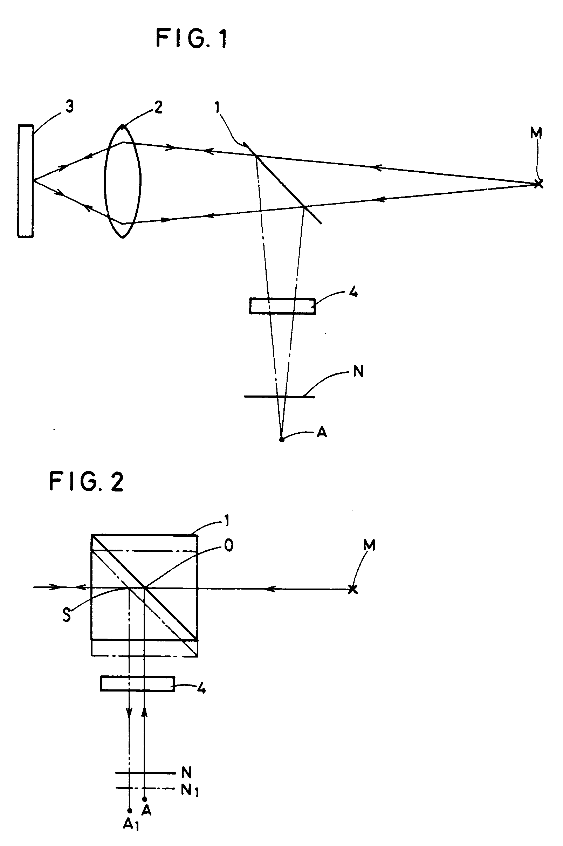

Figure 1 is a schematic structural view of a conventional optical system for explaining the aforesaid problems. Referring to Figure 1, the light emitted from a light source M is transmitted through the reflecting surface of a beam splitter 1 and then through an objective 2 and is focused on a disc surface 3. The reflected light from the disc surface 3 is guided by the objective 2 to the beam splitter 1. It is reflected by the reflecting surface of the beam splitter 1 and transmitted through a cylindrical lens 4 to a light detector N. In such arrangements, the distance between the beam splitter 1 and the light source M is equal to the distance between the beam splitter 1 and the convergence point A of light rays reflected by the beam splitter 1 to the light detector N. In other words, the point A and the light source M are in conjugate relation to each otner with respect to the beam splitter 1. Where such an astigmatic optical system is used, the light detector N must be located at a fixed distance from the convergence point A. In such an arrangement, however, if the beam splitter is not correctly located, the position of the light detector N must be readjusted appropriately. Such a problem may be more clearly understood by reference to Figure 2 showing, on an enlarged scale, the relation between the beam splitter, light source, and lignt detector. The light emitted from the light source M is guided through the point 0 on the reflecting surface of the beam splitter 1 to the objective (not shown in Figure 2). On the other hand, the light guided by the objective and reflected by the disc surface is reflected at point 0 on the reflecting surface of the beam splitter 1 and transmitted througn the cylindrical lens 4 to the light detector N. In Figure 2, as is clear from the above description. O̅M̅=O̅A̅ and it is necessary that the distance N̅A̅=I between the convergence point A and the lignt detector N be constant. If the beam splitter 1 is moved downwardly, as shown in phantom lines in Figure 2, the reflected light from the objective is reflected at point S on the reflecting surface of the beam splitter 1. Therefore, the convergence point of the reflected light from point S moves to point A1 which satisfies the relation S̅M̅=S̅A̅1. The distance S̅M̅ between the point S on the reflecting surface of the beam splitter 1 and the light source M is longer by S̅O̅ than the distance O̅M̅ between the point 0 on the reflecting surface of the beam splitter 1 and the light source M before the beam splitter 1 was moved. However, the distance S̅N̅ between the point S on the reflecting surface of the beam splitter 1 and the light detector N is equal to the distance O̅N̅ between the point 0 on the reflecting surface of the beam splitter 1 before the latter was moved and the light detector N. Therefore, the distance between the light detector N and the convergence point A1 is longer than I by S̅O̅, making it necessary to readjust the light detector N to a position N1 shown in phantom line. Thus, in the method disclosed in the prior art, since the reflected light from the disc surface guided from the beam splitter 1 to the light detector is approximately at right angles to the light emitted from the light source M to the beam splitter 1, it has been impossible to avoid the drawbacks that the beam splitter must be very accurately positioned and that complex adjustments of the light detector N are required.

There are prior art arrangements in which the light beam from the light source is parallel to be reflected light falling on the light detector. See, for instance: GB-A-2020800 Figure 1, light leaving source 7 and light from mirror 19 toward detectors 18; GB-A-2101307 Figure 1, light leaving source 10 and light from mirror 22 toward detectors 28, 28′; GB-A-1543634 Figure 3, light leaving light source 15 and light from beam splitter 24 to detectors 3a, 3b; and GB-A-14605742 in respect of the light leaving the write source 5 and the light leaving the mirror 13 towards the detectors 17, 18, 19 (but not in respect of light leaving the read light source 10). This is achieved by the use of a plurality of separate reflective elements, which will have to be separately positioned each with the need for accuracy described above. In each of the prior art documents described above, the two beams are parallel and in the same direction.

DE-A-3 132 819 discloses an arrangement employing a so-called critical angle detection method in which light from a disc surface is reflected by a reflecting surface of a polarizing prism and is made incident at a critical angle on a detection prism surface. Light is projected through the polarizing prism toward the disc surface.

According to the present invention there is provided an optical device comprising:
a light source (101),
an objective (107) for focusing light from the light source on a storage surface of a recording medium,
a light detector (110) for receiving light reflected from the storage surface of the recording medium by way of the objective (107) and
beam splitting and reflecting means (104) arranged between the light source (101) and the objective (107) and between the light detector (110) and the objective (107) for directing light travelling from the light source (101) toward the objective (107) and for directing reflected light travelling from the objective toward the light detector, said reflected light leaving the beam splitting and reflecting means being convergent toward a convergence point (A) conjugate with said light source, and said light detector (110) being so positioned as to be spaced apart from said convergence point (A) characterised in that in order to provide a substantial tolerance in the positioning of the beam splitting and reflecting means while maintaining the position of said conjugate point in a sense along the optical axis substantially fixed, the said beam splitting and reflecting means comprises a beam splitter (104) which is a single optical part bearing two substantially parallel reflecting surfaces (114, 115) fast with each other, said beam splitter being arranged so that said light travelling from the light source (101) toward said objective (107) is incident on a first said reflecting surface (34, 44, 54, 64, 74, 84) from a first direction and is reflected thereby, and so that said reflected light from the objective (107) is transmitted through said first reflecting surface and reflected by the second said reflecting surface (35, 45, 55, 65, 75, 85) and leaves said second reflecting surface in a second direction which is parallel and opposite to said first direction.

Because the two reflecting surfaces are fast with each other, movement of one is accompanied by a corresponding movement of the other. In view of this, the allowance for positioning these optical parts can be increased and the need for complex adjustments reduced.

Embodiments of the present invention, given by way of example will now be described with reference to the accompanying drawings, in which:
Figure 1 is a view showing the arrangement of an optical system of prior art for explaining the problems with prior art;
Figure 2 is a fragmentary enlarged structural view of the principal portion of the arrangement shown in Figure 1;
Figure 3 is a schematic structural view for explaining the arrangement and principal of a beam splitter in accordance with an embodiment of the present invention;
Figures 4 to 10 are views of alternative beam splitters for embodiments of the present invention; Figure 4 shows a beam splitter wherein a first reflecting surface transmits the light from the light source and the reflected light from the disc surface guided through the objective is reflected;
Figure 5 shows a beam splitter of the type in which a first prism in the form of a cube having a first reflecting surface and a second prism are joined together;
Figure 6 shows a beam splitter wherein the first and second prisms are joined togetner through a light-transmitting member;
Figure 7 shows a beam splitter wherein the first and second prisms are joined together tnrough a non-light-transmitting member having a hollow portion serving as a light path;
Figure 8 shows a beam splitter wherein the first prism and a mirror forming a second reflecting surface are joined together through a non-light-transmitting member having a hollow portion serving as a light path:
Figure 9 shows a beam splitter wherein a cubic prism and a quadrilateral prism are joined together;
Figure 10 shows a beam splitter having two cubic prisms joined together; Figures 11 to 14 are views showing an embodiment of the invention;
Figure 11 is a perspective view showing the positional relationship betwen the optical parts of the embodiment;
Figure 12 is a perspective view showing how the optical parts shown in Figure 11 are assembled in an apparatus;
Figure 13 is a plan view showing the optical parts in the assembled state; and
Figure 14 is a sectional view taken along the line XIV-XIV in Figure 13.

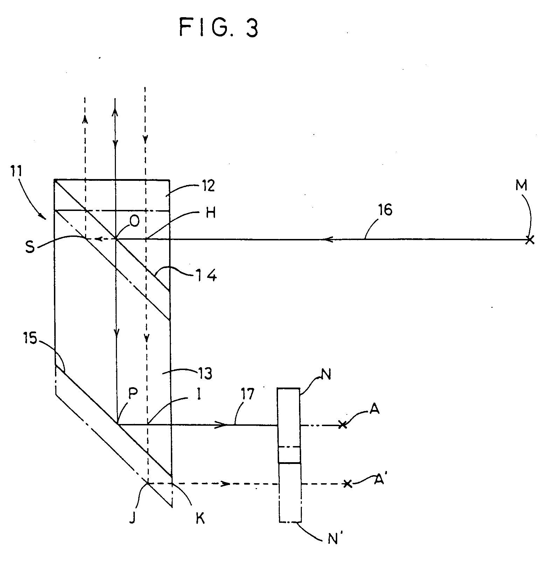

Figure 3 is a structural view for explaining the arrangement and principle of a beam splitter in accordance with an embodiment of the present invention. A beam splitter 11 has a configuration in which a first prism 12 and a second prism 13 are joined together. The first and second prisms 12 and 13 have a first reflecting surface 14 and a second reflecting surface 15, respectively. The first reflecting surface 14 reflects the light 16 from a light source M and transmits the reflected light to the disc surface via an objective (not shown). The second reflecting surface 15 reflects the reflected light from the disc surface, which has been transmitted through the first reflecting surface 14. The first and second reflecting surfacs 14 and 15 are arranged approximately parallel to each other. Therefore, the incident light 16 from the light source M is parallel and opposite to the reflected light 17 from the disc surface guided from the beam splitter 11 to a light detector N.

Next, the advantages of the beam splitter 11 shown in Figure 3 over the conventional beam splitter 1 shown in Figure 2 will now be described. The light emitted from the light source M is reflected at point 0 on the first reflecting surface 14 of the beam splitter 11 and guided to the objective (not shown). On the other hand, the reflected light from the disc surface is transmitted through the first reflecting surface 14, reflected at point P on the second reflecting surface, and guided to the light detector N. In this connection, point A in Figure 3 denotes the convergence point of the light reflected at point P on the second reflecting surface 15, said point being in conjugate relation to the point source M with respect to the point 0. As previously described with reference to the prior art, when using an astigmatic optical system, it is required that the distance I between the light detector N and the convergence point A be constant. As considered from these facts, the following relation holds.

Setting
O̅M̅=I gives
L=O̅M̅=O̅P̅+P̅A̅,
I=N̅A̅=constant.

If the beam splitter 11 is deviated downwardly as shown in phantom lines in Figure 3, the light 16 from the light source M is reflected at point S on the first reflecting surface and guided to the objective (not shown). Therefore, the reference point moves from point 0 to points S and H. Thus, the length of path of light emitted from the light source M to the first reflecting surface 14 is
S̅M̅=S̅O̅+O̅M̅.
Setting S̅O̅=ΔL gives
S̅M̅ = L+ΔL.

Therefore, the length of the light path increases by ΔL.

On the other hand the light reflected by the disc surface is transmitted through the objective and then through point H and the first reflecting surface 14, and reflected at point J on the second reflecting surface 15 to the light detector N′. The length of path of light between the reference point H and the light detector N′ is
H̅J̅+J̅N̅′=H̅I̅+I̅J̅+J̅N̅′

Therefore, because of the relations H̅I̅=O̅P̅, J̅N̅′=P̅N̅-P̅I̅ and I̅J̅=S̅O̅+O̅H̅=S̅O̅+P̅I̅, the length of this path of light is
O̅P̅+S̅O̅+P̅N̅=L+ΔL-I.

Before the beam splitter is displaced, the length of path of light between the reference point 0 and the light detector N is
O̅P̅+P̅N̅=L-I.

Thus, the length of the light path between the first reflecting surface 14 and the light detector N also increases by ΔL.

As is clear from the above description, the amount of change in the length of the light path between the light source M and the reference point on the first reflecting surface is equal to the amount of change in the length of the light path between the light detector N and the reference point on the first reflecting surface 14 irrespective of the amount of deviation of the beam splitter 11. Stated differently, both the length between the light source M and the disc surface and the length between convergence point A and the disc surface remain unchanged. Thus, as is clear from Figure 3, because of the relation S̅H̅=I̅J̅, even if the beam splitter 11 is deviated as described above, the length between the reference point S and the light source M equals to the length between the reference point H and the convergence point A'.

Therefore, even if the beam splitter 11 is deviated, the distance I between the convergence point A and the light detector is kept constant. Thus, even if the beam splitter 11 is installed at a deviated position as shown in phantom lines in Figures 3, there is no need to adjust the light detector N along optical axis. This means that the allowance for positioning the beam splitter 11 is very large. Further, since the positioning and adjustment of the beam splitter 11 and light detector N are simplified, it is possible to produce a highly reliable optical system.

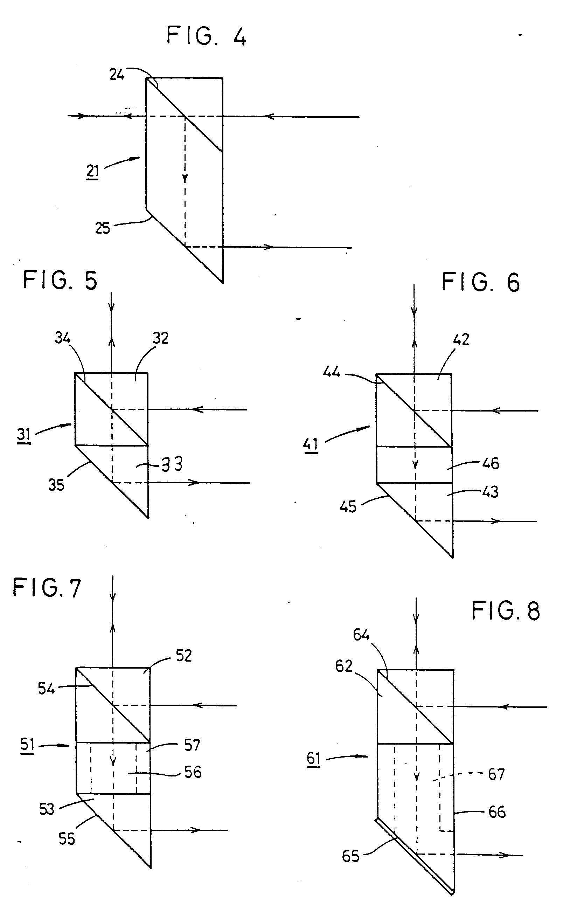

Figures 4 to 10 show modifications of the aforesaid beam splitter 11.

As shown in Figure 4, the first reflecting surface 24 is provided by using a beam splitter 21 having a reflecting surface which transmits the light from the light source M and reflects the reflected light from the disc surface to the second reflecting surface 25.

In an example shown in Figure 5, a beam splitter 31 comprises a first cubic prism 32 having a first reflecting surface 34 and a second traiangular prism 33 having a second reflecting surface 35, said prisms being joined together.

In an example shown in Figure 6, a beam splitter 41 comprises a first prism 42 and a second prism 43, bearing respective reflecting surfaces 44, 45, which are joined together with a light-transmitting member 46, such as glass, interposed therebetween.

In an example shown in Figure 7, a first prism 52 and a second prism 53, bearing respective reflecting surfaces 54, 55, are joined together with a non-light-transmitting member 57 having a hollow portion 56 serving as a light path interposed therebetween.

In an example shown in Figure 8, a beam splitter 61 comprises a first prism 62 and a non-light-transmitting member 66 joined to said first prism 62. The non-light-transmitting member 66 has a hollow portion 67 serving as a light path and a mirror serving as a second reflecting surface 65, said mirror being attached to the front end of the beam splitter 61 so that it is approximately parallel to the first reflecting surface 64 of the first prism 62.

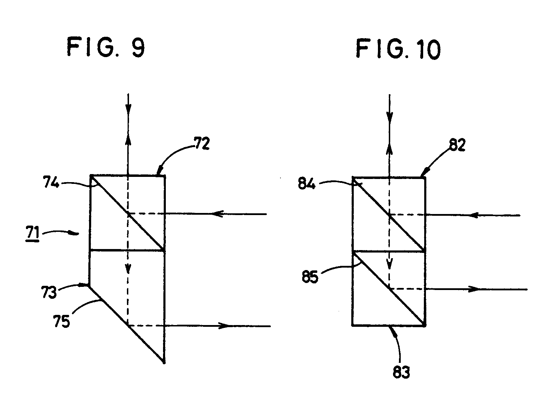

In an example shown in Figure 9, a beam splitter 71 comprises a first cubic prism 72 having a first reflecting surface 74 and a second quadrilateral prism 73 joined to the first prism 72 and having a second reflecting surface 75.

In an example shown in Figure 10, first and second prisms 82 and 83 in cubic form are joined together, having a first reflecting surface 84 and a second reflecting surface 85, respectively.

In the beam splitters shown in Figures 4 to 10, as in the beam splitter 11 shown in Figure 3, the incident light from the light source and the reflected light from the disc surface guided to the light detector can be made parallel and opposite to each other, as can be easily understood.

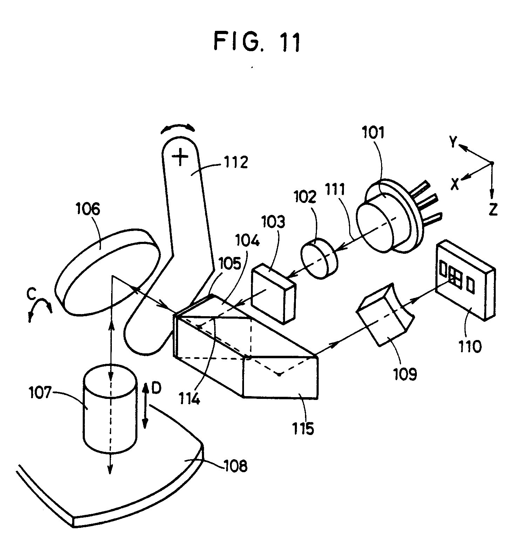

An embodiment of an optical device according to the present invention and having a beam splitter of the aforesaid construction will now be described. Figure 11 is a schematic perspective view for explaining the positional relation of optical parts in the embodiment. Referring to Figure 11, the numeral 101 denotes a semiconductor laser serving as a light source; 102 denotes a convex lens; 103 denotes a diffraction grating; 104 denotes a beam splitter 105 denotes a phase plate; 106 denotes a mirror; 107 denotes an objective; 108 denotes a disc; 109 denotes a cylindrical lens; and 110 denotes a light detector.

Laser beam 111 emitted from the semiconductor laser 101 has its diffusion angle adjusted by the convex lens 102. It is then diffracted by the diffraction grating 103 into a plurality of light beams. Of the beams of diffracted light, at least the 0th and 1st orders of light are reflected by the beam splitter 104 at right angles (in the direction Y in the coordinate system shown in Figure 11). Further, it is reflected by the mirror 106 in the direction Z to fall on the objective 107, forming a spot of light on the disc 108.

On the other hand, the light reflected by the disc 108 travels opposite to the incident light; thus, it is caused to fall on the beam splitter 104 by the ohjective 107, mirror 106 and phase plate 105. In the beam splitter 104, it is transmitted through the first reflecting surface 114 and reflected by the second reflecting surface 115 to the cylindrical lens 109 and then to the light detector 110. The plane defined by the X and Y axes in Figure 11 is approximately parallel to the disc surface, and the Z axis is approximately at right angles to the disc surface. In the aforesaid arrangement, the convex lens 102, diffraction grating 103, and objective 107 are positioned approximately at right angles to the axis of the light beam, while the reflecting surfaces 114 and 115 of the beam splitter 104 and the mirror 106 are disposed so that they have planes at an angle of about 45° with respect to the optical axis. The parts are arranged in desired positional relation to each other. A shutter 112 is disposed between the phase plate 105 and the mirror 106 and has the function of interrupting the light beam during non-operation. Further, the mirror 106 is rotatable in the direction of arrow C to move the spot of light in a direction at right angles to the track (not shown) on the disc 108. The objective 107 is movable in the direction of the optical axis, namely, in the direction of arrow D.

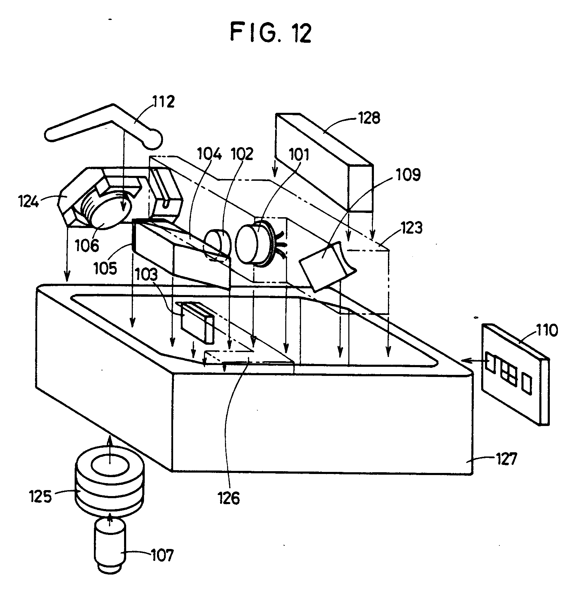

Reference will now be made to Figures 12 to 14 showing an embodiment for achieving the aforesaid arrangement. In Figure 12, the numeral 123 denotes a holder shown in phantom lines. The holder 123 integrally and fixedly holds the semiconductor laser 101, convex lens 102, tracking actuator 124 which makes the mirror 106 rotatable, and cylindrical lens 109 in desired positional relation. The numeral 125 denotes a focus actuator making the objective 107 movable in the direction of the optical axis. The numeral 126 denotes an adjusting holder, shown in phantom lines, for holding the diffraction grating 103 so that it can be adjusted in a plane orthogonally crossing the optical axis.

The holder 123, beam splitter 104, focus acutator 125, adjusting holder 126, light detector 110, and shutter 112 are attached to the base 127 at predetermined reference positions, whereby the parts are fixed in desired positional relation.

The numeral 128 denotes an automatic output control circuit for controlling the output of the semiconductor laser to a constant value. Generally, the semiconductor laser 101 varies in output with temperature and tends to be damaged by surges. Thus, this kind of circuit has been used to solve such problems. In this embodiment, this circuit is contained in the device. Therefore, even if there is a variation in the characteristics of individual semiconductor lasers 101, the integral arrangement of the automatic control circuit 128 makes it possible to make adjustments and tests. Further, since it can be installed in the vicinity of the semiconductor laser 101, it is capable of resisting surges.

In addition, as described above, since the beam splitter 104 ensures that the incident light from the light source 101 and the reflected light guided to the light detector 110 are parallel and opposite to each other, the allowance for the positional relation between the beam splitter 104 and the light detector 110 is very large. Thus, it will be easily understood that the assembly and adjustment of the device of this embodiment are very easy.

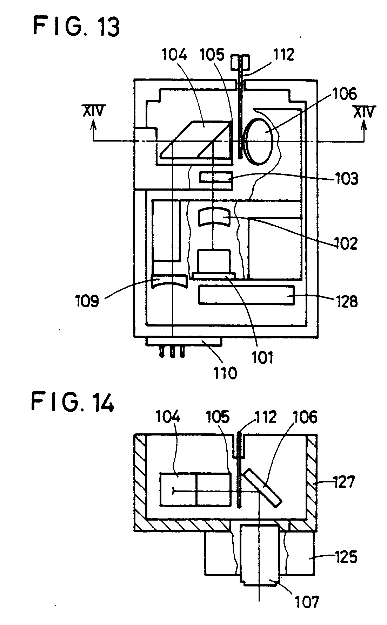

Figures 13 and 14 are plan and sectional views of the apparatus of Figure 12.

In the above description, an astigmatic optical system has been used. However, it should be pointed out that this invention is equally effective when other types of light detecting mechanism are used.

## Claims

1. An optical device comprising:
a light source (101),
an objective (107) for focusing light from the light source on a storage surface of a recording medium,
a light detector (110) for receiving light reflected from the storage surface of the recording medium by way of the objective (107) and
beam splitting and reflecting means (104) arranged between the light source (101) and the objective (107) and between the light detector (110) and the objective (107) for directing light travelling from the light source (101) toward the objective (107) and for directing reflected light travelling from the objective toward the light detector, said reflected light leaving the beam splitting and reflecting means being convergent toward a convergence point (A) conjugate with said light source, and said light detector (110) being so positioned as to be spaced apart from said convergence point (A) characterised in that in order to provide a substantial tolerance in the positioning of the beam splitting and reflecting means while maintaining the position of said conjugate point in a sense along the optical axis substantially fixed, the said beam splitting and reflecting means comprises a beam splitter (104) which is a single optical part bearing two substantially parallel reflecting surfaces (114, 115) fast with each other, said beam splitter being arranged so that said light travelling from the light source (101) toward said objective (107) is incident on a first said reflecting surface (34, 44, 54, 64, 74, 84) from a first direction and is reflected thereby, and so that said reflected light from the objective (107) is transmitted through said first reflecting surface and reflected by the second said reflecting surface (35, 45, 55, 65, 75, 85) and leaves said second reflecting surface in a second direction which is parallel and opposite to said first direction.

2. An optical device according to claim 1 in which the said first and second surfaces are surfaces of first and second prisms respectively, the first and second prisms being joined together.

3. An optical device according to claim 1 in which one of the said first and second surfaces is a beam splitting surface of a prism and the other said surface is a reflecting surface of a mirror, the prism and the mirror being joined together.

4. An optical device according to any one of the preceding claims in which the first and second surfaces are surfaces of first and second prisms which are joined together through a light-transmitting member (46).

5. An optical device according to any one of claims 1 to 3 in which the said first and second surfaces are surfaces of first and second prisms which are joined together through a non-light-transmitting member (57, 66) having a hollow portion (56, 67) providing a light path between the said first and second surfaces.

6. An optical device according to any one of the preceding claims in which the objective (107) is moveable along the light path through it, and it focuses the light from the light source on the said storage surface.

7. An optical device according to any one of the preceding claims in which the light path of reflected light from the said storage surface to the light detector (110) is astigmatic.

## Patentansprüche

1. Optische Einrichtung mit:
einer Lichtquelle (101),
einem Objektiv (107) zum Fokussieren von Licht von der Lichtquelle auf eine Speicheroberfläche eines Aufzeichnungsmediums, einem Lichtdetektor (110) zum Empfangen von Licht, das von der Speicheroberfläche des Aufzeichnungsmediums über den Weg des Objektives (107) reflektiert ist, und
einer Strahlteiler- und Reflektionseinrichtung (104), die zwischen der Lichtquelle (101) und dem Objektiv (107) und zwischen dem Lichtdetektor (110) und dem Objektiv (107) angeordnet ist, zum Lenken des Lichtes, das von der Lichtquelle (101) kommt, zu dem Objektiv (107) und zum Lenken des reflektierten Lichtes, das von dem Objektiv kommt, zu dem Lichtdetektor, wobei das die Strahlteiler- und Reflektionseinrichtung verlassende Licht zu einem Konvergenzpunkt (A), der konjugiert zu der Lichtquelle ist, konvergiert und der Lichtdetektor (110) so positioniert ist, daß er in einem Abstand von dem Konvergenzpunkt (A) angeordnet ist,
dadurch gekennzeichnet, daß zum Vorsehen einer erheblichen Toleranz bei dem Positionieren der Strahlteiler- und Reflektionseinrichtung, während die Position des konjugierten Punktes in einem Sinne entlang der optischen Achse im wesentlichen festgehalten wird, die Strahlteiler- und Reflektionseinrichtung einen Strahlteiler (104) aufweist, der ein einzelnes optisches Teil ist, das zwei im wesentlichen parallele reflektierende Oberflächen (114, 115) trägt, die fest miteinander vorgesehen sind,
wobei der Strahlenteiler so angeordnet ist, daß das von der Lichtquelle (101) zu dem Objektiv (107) gehende Licht auf eine erste der reflektierenden Oberflächen (34, 44, 54, 64, 74, 84) aus einer ersten Richtung trifft und dadurch reflektiert wird und daß das reflektierte Licht von dem Objektiv (107) durch die erste reflektierende Oberfläche durchgelassen wird und von der zweiten reflektierenden Oberfläche (35, 45, 55, 65, 75, 85) reflektiert wird und die zweite reflektierende Fläche in einer zweiten Richtung verläßt, die parallel und entgegengesetzt zu der ersten Richtung ist.

2. Optische Einrichtung nach Anspruch 1,
bei der die erste und zweite Oberfläche Oberflächen eines ersten bzw. zweiten Prismas sind, wobei das erste und zweite Prisma miteinander verbunden sind.

3. Optische Einrichtung nach Anspruch 1,
bei der eine der ersten und zweiten Oberfläche eine Strahlteileroberfläche eines Prismas ist und die andere Oberfläche eine reflektierende Oberfläche eines Spiegels ist, wobei das Prisma und der Spiegel miteinander verbunden sind.

4. Optische Einrichtung nach einem der vorhergehenden Ansprüche,
bei der die erste und zweite Oberfläche Oberflächen eines ersten und zweiten Prismas sind, die durch ein lichtdurchlässiges Teil (46) miteinander verbunden sind.

5. Optische Einrichtung nach einem der Ansprüche 1 bis 3,
bei der die erste und zweite Oberfläche Oberflächen eines ersten und zweiten Prismas sind, die durch ein nicht-lichtdurchlässiges Teil (57, 66) miteinander verbunden sind, das einen hohlen Abschnitt (56, 67) aufweist, der einen Lichtweg zwischen der ersten und zweiten Oberfläche vorsieht.

6. Optische Einrichtung nach einem der vorhergehenden Ansprüche,
bei der das Objektiv (107) entlang des Lichtweges, der durch das Objektiv geht, bewegbar ist und das Licht von der Lichtquelle auf die Speicheroberfläche fokussiert.

7. Optische Einrichtung nach einem der vorhergehenden Ansprüche,
bei der der Lichtweg des reflektierten Lichtes von der Speicheroberfläche zu dem Lichtdetektor (110) astigmatisch ist.

## Revendications

1. Un dispositif optique comprenant:
une source de lumière (101)
un objectif (107) pour focaliser la lumière provenant de la source de lumière sur une surface de stockage d'un support d'enregistrement,
un détecteur de lumière (110) pour recevoir la lumière réfléchie par la surface de stockage du support d'enregistrement au moyen de l'objectif (107), et
des moyens de division et de réflection de faisceaux (104) disposés entre la source de lumière (101) et l'objectif (107) et entre le détecteur de lumière (110) et l'objectif (107) pour diriger la lumière se déplaçant à partir de la source lumineuse (101) vers l'objectif (107) et pour diriger la lumière réfléchie se déplaçant à partir de l'objectif vers le détecteur de lumière, la lumière réfléchie quittant les moyens de division et de réflection de faisceaux convergant vers un point de convergence A conjugué avec la source de lumière, et le détecteur de lumière (110) étant positionné de telle sorte à être espacé du point de convergence A, caractérisé en ce que pour assurer une tolérance importante dans le positionnement des moyens de division et de réflection de faisceaux tout en maintenant la position du point conjugué dans un sens le long de l'axe optique sensiblement fixe, les moyens de division et de réflection de faisceaux comprennent un diviseur de faisceaux (104) qui est une partie optique unique supportant deux surfaces réfléchissantes sensiblement parallèles (114, 115), solidaires l'une de l'autre, le diviseur de faisceaux étant disposé de telle sorte que la lumière se déplaçant à partir de la source lumineuse (101) vers l'objectif (107) est incidente sur une première surface réfléchissante (34, 44, 54, 64, 74, 84) à partir d'une première division et se trouve ainsi réfléchie, et de telle sorte que la lumière réfléchie en provenance de l'objectif (107) est transmise par la première surface réfléchissante et réfléchie par la seconde surface réfléchissante (35, 45, 55, 65, 75, 85) et quitte la seconde surface réfléchissante dans une seconde direction qui est parallèle et opposée à la première direction.

2. Un dispositif optique selon la revendication 1, dans lequel lesdites première et seconde surfaces sont des surfaces de premier et second prismes respectivement, les premier et second prismes étant reliés l'un à l'autre.

3. Un dispositif optique selon la revendication 1, dans lequel l'une desdites première et seconde surfaces est une surface de diviseur de faisceau d'un prisme et l'autre desdites surfaces est une surface réfléchissante d'un miroir, le prisme et le miroir étant reliés l'un à l'autre.

4. Un dispositif optique selon l'une quelconque des revendications précédentes, dans lequel lesdites première et seconde surfaces sont des surfaces de premier et de second éléments diviseurs de faisceau qui sont reliés l'un à l'autre par l'intermédiaire d'un organe transmettant la lumière (46).

5. Un dispositif optique selon l'une quelconque des revendications 1 à 3, dans lequel lesdites première et seconde surfaces sont des surfaces de premier et second éléments diviseurs de faisceau qui sont reliés l'un à l'autre par l'intermédiaire d'un organe qui ne transmet pas la lumière (57, 66), comportant une partie creuse (56, 67) déterminant un passage pour la lumière entre lesdites première et seconde surfaces.

6. Un dispositif optique selon l'une quelconque des revendications précédentes, dans lequel l'objectif (107) peut être déplacé le long du parcours de la lumière et focalise la lumière provenant de la source de lumière sur ladite surface de stockage.

7. Un dispositif optique selon l'une quelconque des revendications précédentes, dans lequel le parcours de la lumière réfléchie provenant de ladite surface de stockage vers le détecteur de lumière (110) est astigmatique.
